## Europäisches Patentamt

## European Patent Office

## Office européen des brevets

(19)

(11) Numéro de publication: **0 194 909**
**B1**

(12) FASCICULE DE BREVET EUROPEEN

(45) Date de publication du fascicule du brevet:
**24.05.89**

(51) Int. Cl.⁴: **B 60 K 15/02**

(21) Numéro de dépôt: **86400289.4**

(22) Date de dépôt· **11.02.86**

(54) Réservoir de carburant pour véhicule automobile.

(30) Priorité: **12.02.85 FR 8501941**

(43) Date de publication de la demande:
**17.09.86 Bulletin 86/38**

(45) Mention de la délivrance du brevet:
**24.05.89 Bulletin 89/21**

(84) Etats contractants désignés:
**AT BE DE GB IT NL SE**

(56) Documents cités:
**DE-A- 2 307 161**
**DE-A- 2 401 728**
**DE-A- 2 830 443**
**FR-A- 1 219 976**
**US-A- 4 107 052**

(73) Titulaire: **REGIE NATIONALE DES USINES RENAULT,**
Boîte postale 103 8-10 avenue Emile Zola,
F-92109 Boulogne-Billancourt (FR)

(72) Inventeur: **Laurent, Christian, 25, rue Carnot,**
**F-77400 Lagny (FR)**
Inventeur: **Bailleul, Domonique, 1, rue des Bois,**
**F-92310 Sevres (FR)**
Inventeur: **Etchegaray, Rolland, 15 bis, Allée de la**
**Pépinière, F-92150 Suresnes (FR)**
Inventeur: **Auduge, Gilles, 21, Grande Rue,**
**F-78580 Maule (FR)**
Inventeur: **Daniel, André, 51, rue Orée de Marly,**
**F-78590 Noisy Le Roi (FR)**

(74) Mandataire: **Saint Martin, René et al, Régie Nationale**
**des Usines Renault Direction des Recherches et**
**Développements Service 0804 8-10, Avenue Emile-Zola,**
**F-92109 Boulogne Billancourt Cedex (FR)**

ACTORUM AG

## Description

La présente invention se rapporte à un réservoir de carburant pour véhicule automobile, comportant un dispositif évitant au maximum l'émersion de l'orifice d'aspiration du liquide lors de situations particulières favorisant ce phénomène, selon le préambule de la revendication 1. Un tel réservoir est connu par exemple par DE-A-2 401 728.

On connaît bien l'inconvénient découlant de l'émersion de l'orifice de la prise d'essence, qui se traduit par l'interruption de l'alimentation du moteur en carburant, pouvant éventuellement provoquer son arrêt ou empêcher son démarrage lorsqu'il stationne dans une pente.

Cet inconvénient est d'autant plus fréquent que la recherche d'une grande autonomie et l'utilisation possible de l'espace disponible dans certaines formes de carrosseries actuelles détermine des profils de réservoirs favorisant l'émersion de l'orifice d'aspiration du carburant.

Ce problème est d'autant plus important que les mouvements du véhicule engendrent des accélérations tendant à accumuler le carburant en particulier sur les parois latérales du réservoir.

Dans ces conditions, la conjugaison de la présence d'une faible quantité de liquide et de certains éléments dynamiques défavorables entraînera les difficultés évoqué précédemment, même si on a pris le soin de disposer l'orifice de la prise d'essence le plus près possible du fond.

On a tenté de remédier à ce problème en disposant un bac de réserve dans lequel est située l'extrémité de la prise d'essence; de cette manière on peut garder captif un volume suffisant de liquide permettant de maintenir un fonctionnement correct du moteur pendant la période correspondant à une situation défavorable du carburant dans le réservoir.

Toutefois, il rest encore à satisfaire deux exigences contradictoires:
– un remplissage rapide et constant dudit bac, même lorsque le volume de liquide est faible et quels que soient ses mouvements.
– une conservation du carburant un temps suffisant pour permettre un retour aux conditions normales.

Ce dernier point peut être aisément pris en compte en dimensionnant le bac en conséquence.

Toutefois, une difficulté réside dans son remplissage rapide, car de larges orifices favorisant cette fonction, laissent dans la même mesure échapper le carburant, nuisant donc à sa conservation.

La présente invention, telle que définie dans la revendication 1, a pour but de pallier l'inconvénient ci-dessus. Elle sera décrite à titre d'exemple non limitatif au regard des figures 1 à 3 ci-jointes, qui se rapportent respectivement:
– la figure 1, à une vue en plan du dispositif selon l'invention;
– la figure 2, à une vue analogue d'une variante de la figure 1;
– la figure 3, à une vue en coupe selon AA de la figure 2.

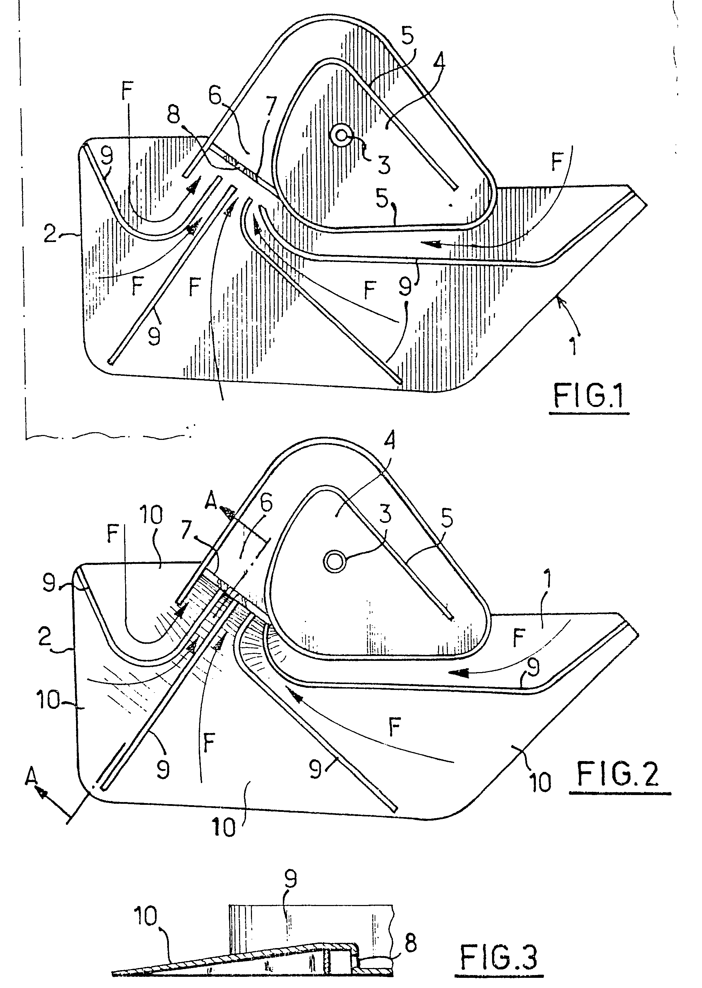

La figure 1 représente le dispositif selon l'invention tel que déposé sur le fond du réservoir, non figuré. Il est constitué par une plaque 1 de contour irrégulier 2, supportant une paroi 5 s'enroulant en labyrinthe, qui s'achève sur l'extérieur selon une ouverture 6. La prise de carburant 3 alimentant le moteur se situe à l'intérieur 4 du labyrinthe qui constitue ainsi le bac de réserve; la hauteur de la paroi 5 est inférieure à celle du réservoir, de façon à permettre le passage du carburant de part et d'autre de cette dernière, notamment lors de l'opération de remplissage.

Une cloison 7 peut être disposée transversalement à l'ouverture 6; elle est de faible hauteur et comporte un petit orifice 8 disposé le plus près possible du fond.

La disposition ci-dessus a pour effet de diminuer le débit de liquide issu du bac 4 tout en assurant sa réalimentation lente à partir du réservoir. En combinaison avec ce qui précède, on notera la présence de nervures 9 captant le carburant circulant à la périphérie du réservoir et le forçant selon les flèches F vers l'entrée 6 du bac 4 en direction de laquelle elles sont dirigées; son gavage obtenu sous l'action de l'énergie cinétique ainsi canalisée à pour effet de diminuer la vidange du bac 4 et donc de retarder l'émersion de l'orifice d'aspiration 3.

De plus, l'intense circulation du carburant qui résulte de la disposition ci-dessus permet des échanges thermiques entre le carburant de retour du moteur et celui qui est aspiré pour son alimentation, réduisant ainsi les risques de formation de vapeur dans le circuit correspondant.

Selon la variante de l'invention illustrée aux figures 2 et 3, on voit (figure 2) que le fond du dispositif n'est pas plan, comme selon la représentation précédente, mais qu'il constitue entre les nervures 9 des rampes 10 améliorant encore le gavage du bac 4; son entrée 6 est également barrée par une cloison 7 de faible hauteur percée d'une ou plusieurs ouvertures 8. Sa présence permet la réalimentation lente du bac 4 à partir du carburant présent dans le réservoir, sur le fond duquel il repose; au contraire, lorsque le véhicule se déplace, les mouvements du liquide circulant à la périphérie du réservoir sont captés par les nervures 9 qui le forcent vers le bac 4.

## Revendications

1. Réservoir de carburant pour véhicule automobile, du type comportant un bac (4) de réserve de carburant constitué par une paroi (5) s'enroulant en spirale, à l'intérieur duquel est situé l'orifice d'aspiration (3) de la prise d'essence, caractérisé par le fait que ladite paroi (5) est fixée sur une plaque (1) disposée sur le fond du réservoir, ladite plaque (1) comportant également des nervures (9) dont la forme et l'orientation ramène le carburant circulant à la périphérie du réservoir en direction de l'ouverture (6) du bac (4).

2. Réservoir de carburant selon la revendication 1, caractérisé en ce que l'entrée (6) du bac (4) est barrée par une cloison (7) de faible hauteur, pourvue d'un orifice (8) disposé le plus près possible du fond du réservoir.

3. Réservoir de carburant selon la revendication 1, caractérisé en ce que le fond des canaux déterminés par les nervures (9) et la plaque (1) constitue une rampe inclinée (10) s'élevant en direction de la cloison (7) jusqu'à son sommet.

## Patentansprüche

1. Kraftstofftank für Kraftfahrzeuge mit einem Reservegefäss (4), der aus einer sich spiralförmig aufwickelnden Wand (5) besteht, in deren Inneren die Ansaugöffnung (3) für den Kraftstoff vorgesehen ist, dadurch gekennzeichnet, dass die Wand (5) an einer Platte (1) befestigt ist, die am Tankboden angeordnet ist, wobei die Platte (1) zusätzliche Rippen (9) aufweist, deren Ausgestaltung und Ausrichtung den an der Tankwandung entlang fliessenden Kraftstoff in Richtung der Öffnung (6) des Gefässes (4) führen.

2. Kraftstofftank nach Anspruch 1, dadurch gekennzeichnet, dass der Einlass (6) des Gefässes (4) durch eine Trennwand (7) geringer Höhe verschlossen ist, die eine Öffnung (8) aufweist, die dem Tankboden unmittelbar benachbart ist.

3. Kraftstofftank nach Anspruch 1, dadurch gekennzeichnet, dass der Boden der durch die Rippen (9) und die Platte (1) gebildeten Kanäle eine geneigte Fläche (10) bildet, der in Richtung der Trennwand (7) bis zu deren Oberseite ansteigt.

## Claims

1. A fuel tank for a motor vehicle of the type comprising a fuel reserve container (4) formed by a wall (5) which is wound in a spiral and in the interior of which is disposed the petrol pick-up intake orifice (3) characterised in that said wall (5) is fixed on a plate (1) disposed on the bottom of the tank, said plate (1) also comprising ribs (9) whose shape and orientation directs the fuel circulating at the periphery of the tank towards the opening (6) of the container (4).

2. A fuel tank according to claim 1 characterised in that the intake (6) of the container (4) is barred by a partition (7) of small height which is provided with an orifice (8) disposed as close to the bottom of the tank as possible.

3. A fuel tank according to claim 1 characterised in that the bottom of the passages defined by the ribs (9) and the plate (1) form an inclined ramp (10) which rises towards the partition (7) to the top thereof.

1/1

FIG.1

FIG.2

FIG.3